# EUROPÄISCHE PATENTANMELDUNG

(11) **EP 0 673 829 A2**
(43) Veröffentlichungstag der Anmeldung: **27.09.1995**
(21) Anmeldenummer: 95103840.5
(22) Anmeldetag: 16.03.1995
(51) Int. Cl.: B62D 25/08, B62D 1/16, B62D 29/00

(54) **Träger für die Lenksäule eines Kraftfahrzeuges**

(30) Priorität: 23.03.1994 DE 4410082
(71) Anmelder: VAW Aluminium AG, D-53117 Bonn (DE)
(72) Erfinder: Ebert, Jörg, Dr., D-50858 Köln (DE)
(74) Vertreter: Harwardt, Günther

(57) **Zusammenfassung**

Die Erfindung betrifft einen Träger für die Lagerung einer Lenksäule mit Lenkrad für ein Kraftfahrzeug. Der Träger ist aus einem Querträger 1 mit Laschen 4, 4a, einer daran befestigten Stütze 3 zur Verbindung mit dem Tunnel des Kraftfahrzeuges und an einem Halter 2 zur Befestigung am Armaturentafelhalter aufgebaut. Diese sind als Strangpreßprofile gestaltet und da sie aus einem Aluminiumwerkstoff bestehen entsprechend leicht. Die erforderliche Festigkeit wird aufgrund der Ausbildung als Hohlprofil erreicht. Es wird eine erschütterungsfreie Lagerung des Lenkrades erzielt.

## Beschreibung

Die Erfindung betrifft einen Träger für die Lagerung einer Lenksäule mit Lenkrad für ein Kraftfahrzeug, insbesondere einen Personenkraftwagen, mit einem hohlen Querträger, der zur Anordnung quer zur Fahrzeuglängsachse zwischen den beiden und zur Befestigung an den beiden A-Säulen des Kraftfahrzeuges gedacht ist, mit einer Stütze, die am Querträger befestigt ist, von diesem nach unten absteht und zur Befestigung an der Bodengruppe oder dem Tunnel des Kraftfahrzeuges gedacht ist, und mit Mitteln zur Befestigung der Lagerung für die Lenksäule.

Ein solcher Träger ist in der US-A-4826234 beschrieben. Der Querträger ist als Rohr gestaltet. Dieser wird in Lagerböcken, die als Blechteile gestaltet und mit den A-Säulen verbunden sind, mit seiner runden Außenfläche in entsprechenden Aufnahmeflächen aufgenommen. Er wird in diesen durch eine Klammer oder einen Bügel festgelegt.
Ein Träger der aus Stahlblech hergestellt ist und aus einer Vielzahl von einzelnen Teilen aufgebaut ist, ist in der US-A-4362331 beschrieben. Die Teile bilden einen geschlossenen Hohlquerschnitt.

Für einen Träger, an den die Lenksäule gelagert werden soll, besteht die Forderung, daß sie möglichst starr ausgebildet ist, damit Schwingungen nicht auf das Lenkrad übertragen werden. Aus diesem Grunde ist zusätzlich über den Kalter eine Befestigung zum Armaturentafelhalter und über die Stütze zur Bodengruppe bzw. zum Tunnel hin vorgesehen. Ferner dient der Querträger auch als Abstützbasis für einen Airbag. Der Träger muß darüber hinaus so steif sein, daß es bei einem Unfall nicht zu Verformungen kommt, d.h. das Lenkrad muß sicher gehalten sein und darf nicht weiter in den Fahrgastraum eindringen.

Aus diesem Grunde ist der Träger entsprechend kostenaufwendig und obwohl er als Blechteil ausgebildet ist, relativ schwer.

Der Erfindung liegt daher die Aufgabe zugrunde, einen Träger für die Lagerung einer Lenksäule mit Lenkrad für ein Kraftfahrzeug zu schaffen, der einfach im Aufbau ist, kostengünstig herstellbar ist, leichtgewichtig ist und trotzdem eine hohe Steifigkeit aufweist.

Diese Aufgabe wird erfindungsgemäß dadurch gelöst, daß ein Halter vorgesehen ist, der am Querträger befestigt ist, und von diesem nach oben absteht und zur Befestigung am unteren Windschutzscheibenquerträger des Kraftfahrzeuges gedacht ist, daß der Halter und die Stütze und der Querträger aus Hohlprofilen aus einem Aluminiumwerkstoff gebildet sind, daß der Querträger Laschen zur Befestigung an den beiden A-Säulen und die Stütze Anschlußabschnitte zur Befestigung mit dem Querträger einerseits und an der Bodengruppe oder dem Tunnel des Kraftfahrzeuges andererseits aufweist, wobei die Anschlußabschnitte der Stütze und die Laschen des Querträgers von verbleibenden Teilen der Wände der als Hohlprofile gestalteten Basisteile gebildet und die Laschen des Querträgers und zumindest der/die Anschlußabschnitt/e der Stütze zur Befestigung am Querträger jeweils zum Verlauf ihres als Hohlprofil verbleibenden Abschnittes abgewinkelt ist/sind.
Von Vorteil bei dieser Ausbildung ist, daß einfache Profile verwendet werden können, die eine hohe Steifigkeit besitzen. Darüber hinaus sind solche Teile, insbesondere wenn sie als Strangpreßteile, Rollformteile oder aus längsnahtgeschweißten Rohren ausgebildet sind, kostengünstig, da nur wenige Teile benötigt werden, um den Träger aufzubauen. Dies bedeutet, daß nur wenige Fügeoperationen durchzuführen sind, was auch zu einer verbesserten Maßhaltigkeit führt. Darüber hinaus ergibt sich eine Gewichtseinsparung, die sich vorteilhaft auf das Fahrzeuggewicht und damit den Energieverbrauch auswirkt. Ferner ist durch die Verwendung eines Aluminiumwerkstoffes die Möglichkeit gegeben, auf Korrosionsschutz gegenüber den aus Stahlblech geformten bisherigen Trägern zu verzichten. Ein weiterer Vorteil ist darin gegeben, daß eine besonders günstige Herstellung im Wege des Strangpressens möglich ist, weil die Werkzeugkosten beim Strangpressen gering sind und darüber hinaus in erheblicher Anzahl Fügestellen gegenüber der Lösung nach dem Stand der Technik vermieden werden.
Durch die gewählte Ausbildung des Trägers wird eine hohe Eigenfrequenz in Hoch- und Längsrichtung des Fahrzeuges erreicht, so daß ein Schütteln des Lenkrades durch die steife Lagerbasis, die zur Verfügung gestellt wird, vermieden wird. Darüber hinaus kann der Querträger, obwohl er als Hohlprofil gestaltet ist, auch gebogen werden, um beispielsweise an verschiedene Raumanforderungen angepaßt werden zu können.

In Ausgestaltung der Erfindung ist vorgesehen, daß die Laschen und/oder die Anschlußabschnitte durch Abtrennen von Abschnitten der übrigen Wände des jeweiligen Basisteiles oder Teilen der Wände gebildet sind. Der Grundquerschnitt der Basisteile kann also so gewählt werden, daß sich die Laschen und/oder die Anschlußabschnitte durch Entfernen der übrigen Wände ergeben, was günstig durch Stanzen erreicht wird.

In Konkretisierung der Anschlüsse kann vorgesehen sein, daß der zur Befestigung an der Bodengruppe oder dem Tunnel und der Anschlußabschnitte der Stütze oder des Halters zum Verlauf des verbleibenden Hohlprofilquerschnittes des jeweiligen Basisteiles abgewinkelt ist.
Eine günstige Gestaltung für den Querträger ergibt sich, wenn das Basisteil, aus dem der Querträger gebildet ist, im Querschnitt als Rechteckhohlprofil, mit einem Obergurt, einem dazu parallelen Untergurt und den beiden jeweils ein Ende derselben verbindenden ersten und zweiten Stege gestaltet ist, wobei mindestens einer der beiden Stege über den Obergurt und/oder den Untergurt übersteht.
Durch die Überstände können Anschlußmöglichkeiten geschaffen werden oder aber auch eine verbreiterte Abstützbasis oder höhere Festigkeiten erreicht werden.

Vorzugsweise ist ein Steg beidseitig über den Obergurt und den Untergurt zur Bildung von Befestigungsabschnitten überstehend gestaltet. Die Befestigungsabschnitte dienen zum Anschluß von entsprechenden Abschnitten des Halters.

Des weiteren ist vorgesehen, daß ein Steg einseitig über den Untergurt hinausgeführt ist. Hierdurch erfolgt eine Festigkeitserhöhung in Hochrichtung des Fahrzeuges und darüber hinaus eine Verbreiterung der Abstützbasis beispielsweise für den Beifahrer-Airbag.

Da der Querträger über die gesamte Breite des Fahrzeuges geführt ist, kann der vergrößerte Steg auch als Abstützbasis für den Beifahrer-Airbag dienen.

In Ausgestaltung der Erfindung ist vorgesehen, daß der Halter mit dem ersten Steg verbunden ist und, im Querschnitt des Querträgers gesehen, neben dem Querträger angeordnet ist. Der Halter weist vorzugsweise einen Flansch mit freien Flanschabschnitten auf, welche an den vorstehenden Befestigungsabschnitten des Querträgers befestigt sind. Diese frei zugänglichen Abschnitte ermöglichen eine Verbindung in einfacher Weise. Es kommen verschiedene Verbindungsmöglichkeiten in Frage.

Um die Festigkeit des Querträgers noch zu erhöhen, ist vorgesehen, daß, im Querschnitt gesehen, der zweite Steg zum einen an der Verbindung zum Obergurt und zum anderen zum freien Ende des über den Untergurt vorstehenden Teils hin je mit einer Sicke versehen ist.

Das Basisteil, aus dem die Stütze gebildet ist, ist im Querschnitt als Viereckhohlprofil gestaltet. Insbesondere kommt für die Stütze die Herstellung als Strangpreßteil in Frage.

In Konkretisierung der Stütze ist vorgesehen, daß eine der Wände der Stütze, im Querschnitt gesehen, über den Anschluß zu den beiden anschließenden Wänden vorsteht.

Das Basisteil, aus dem der Kalter gestaltet ist, im Querschnitt gesehen aus, zwei Dreiecken und einem Viereck aufgebaut, wobei die beiden Dreiecke eine gemeinsame Seite besitzen. Eines der Dreiecke besitzt darüber hinaus eine gemeinsame Seite mit dem Viereck. Das Dreieck, das nicht zusätzlich mit dem Viereck verbunden ist, besitzt eine Verlängerung an seiner Spitze zur Bildung einer Verbindungslasche. Die Verbindungslasche dient zur Verbindung mit dem unteren Windschutzscheibenquerträger. Das Viereck besitzt eine Seite, die als Flansch gestaltet ist und über seine anderen Seiten übersteht und freie Flanschabschnitte bildet. Diese freien Flanschabschnitte dienen zur Verbindung mit den Befestigungsabschnitten des Querträgers.

Die Seite, die das Viereck gemeinsam mit dem zweiten Dreieck hat, und die dazu parallele Seite sind über das Dreieck hinaus verlängert, so daß sich genügend Freiraum zwischen dem Querträger und dem Dreieck ergibt, daß ein Werkzeug zur Verbindung des Halters mit dem Querträger angesetzt werden kann.

Der Kalter bietet sich insbesondere an, als Strangpreßteil dargestellt zu sein. Daraus resultieren erhebliche Gestaltungsfreiheiten hinsichtlich der Ausbildung des Halters und damit dessen Verformungseigenschaften, um zu gewährleisten, daß bei einer Verformung die aus einem Unfall resultiert, das Lenkrad nach oben abgekippt und nicht in den Fahrgastraum bewegt wird und darüber hinaus Energie verzehrt werden kann. Solche Verformungseigenschaften werden beispielsweise durch die Lage und Ausrichtung der gemeinsamen Seite zwischen den beiden Dreiecken beeinflußt.

Darüber hinaus können in dem Viereck Einformungen in Form von Schraubkanälen oder dergleichen Anschlußmitteln vorgesehen sein, um in einfacher Weise die Lagerung für die Lenksäule befestigen zu können. Solche Schraubkanäle können zum Einbringen von Gewinde dienen.

Als Verbindungsmöglichkeit von Halter und/oder Stütze mit dem Querträger bietet sich das Clinchen, Kleben oder Schrauben an. Besonders das Clinchen ist von Vorteil, weil hiermit eine form- und reibschlüssige Verbindung mit dem gleichen Werkstoff erzielt wird, d.h. es werden aufgrund der Ausformungen des Materials der zu verbindenden Abschnitte Verbindungsmöglichkeiten geschaffen, die ein Recyclen erleichtern, da keine Fremdwerkstoffe enthalten sind.

Als Aluminiumwerkstoff, der besonders für die Herstellung des Trägers geeignet und als Strangpreßwerkstoff günstig ist, kommt eine AA6xxx Legierung und für Rollformprofile bzw. längsnahtgeschweißte Rohre eine Legierung der Familie AA5xxx in Frage.

Ein bevorzugtes Ausführungsbeispiel der Erfindung ist in der Zeichnung schematisch dargestellt.

Es zeigt
- Fig. 1: eine perspektivische Ansicht des erfindungsgemäßen Trägers,

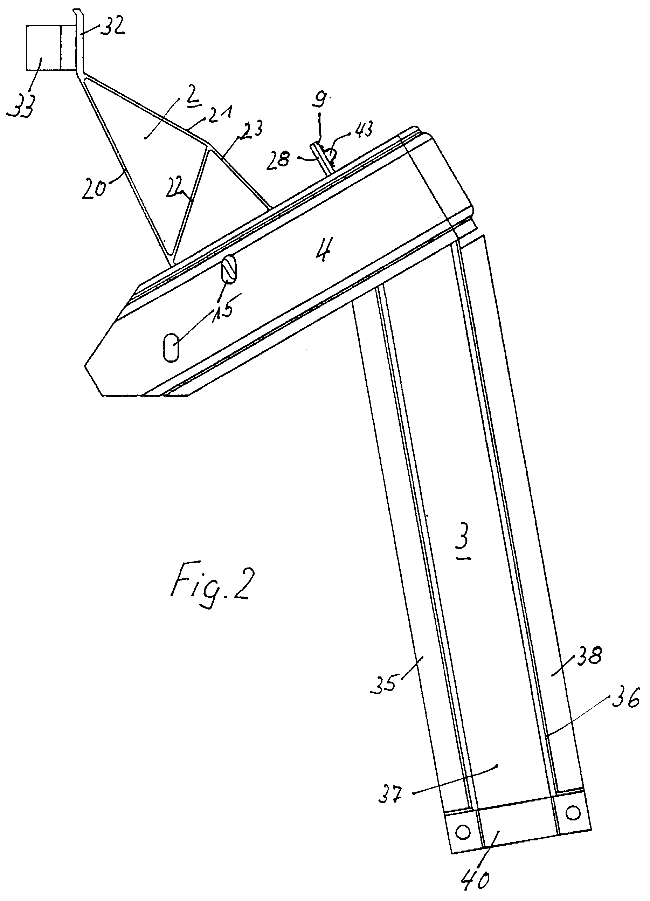

- Fig. 2: eine Ansicht in Pfeilrichtung X gemäß Fig. 1,

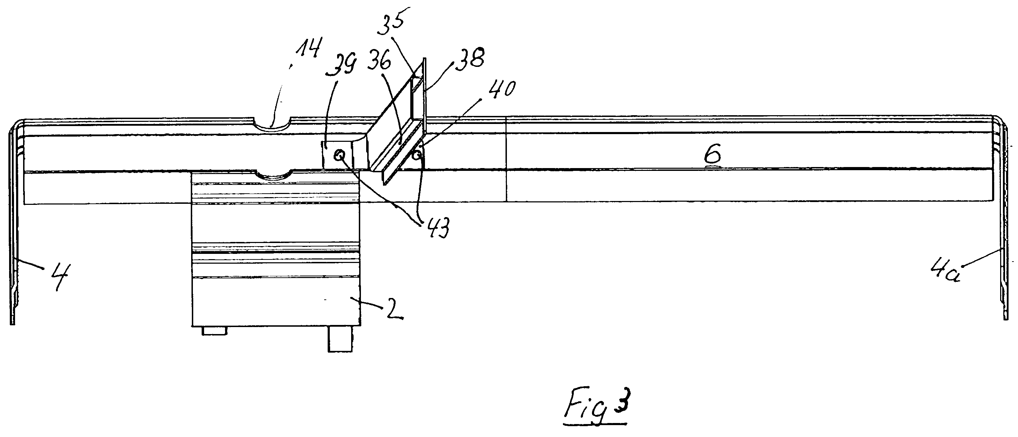

- Fig. 3: eine Ansicht in Pfeilrichtung Y gemäß Fig. 1,
- Fig. 4: den Querschnitt des Querträgers,

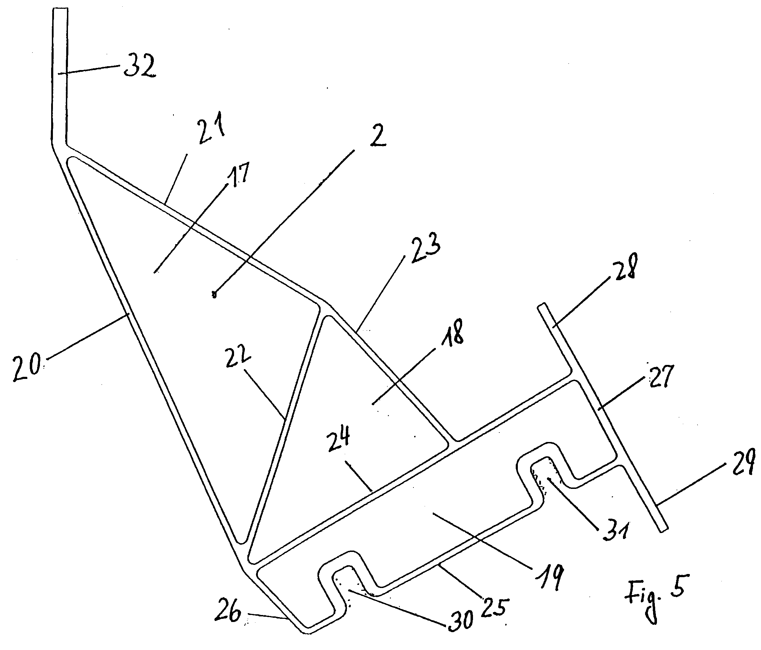

- Fig. 5: den Querschnitt des Halters,
- Fig. 6: einen Querschnitt der Stütze.

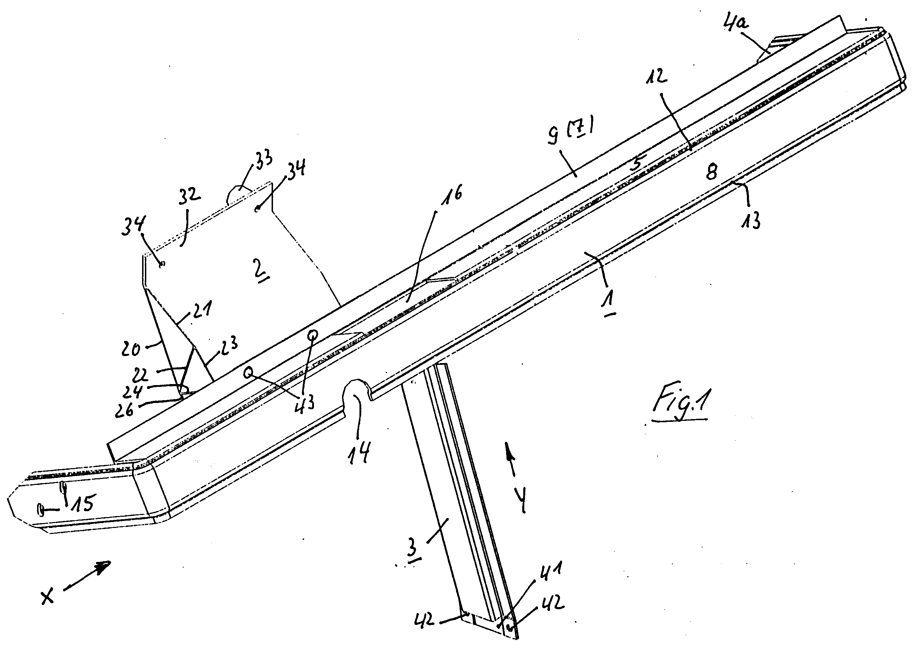

Der Träger gemäß Fig. 1 besteht aus dem Querträger 1, dem Halter 2 und der Stütze 3. Der Querträger 1 besitzt an den beiden Enden Laschen 4, 4a, die Bohrungen 15 aufweisen, mit welchen sie mit den beiden A-Säulen des Kraftfahrzeuges verbunden werden können.

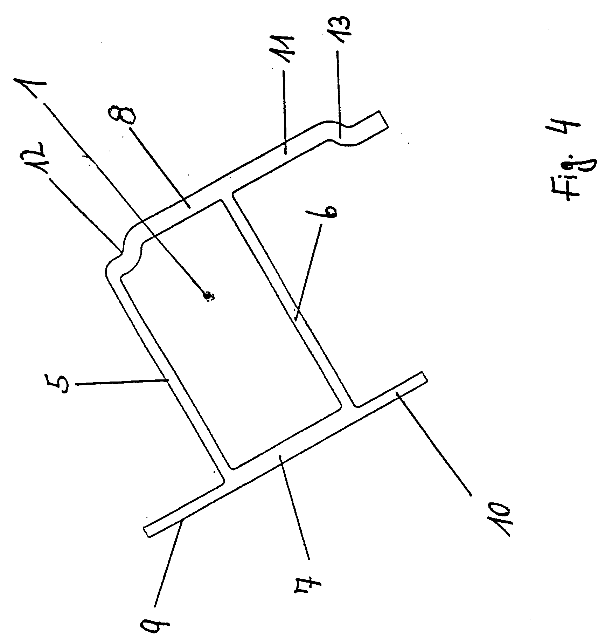

Wie aus Fig. 4 ersichtlich, sind der Querträger 1 im Querschnitt als Hohlprofil, beispielsweise Strangpreßprofil aus einem Aluminiumwerkstoff gestaltet, wobei der Hohlraum von dem Obergurt 5, dem dazu parallelen Untergurt 6, einem beide verbindenden ersten Steg 7 und einem zweiten Steg 8 umschlossen wird. Der erste Steg 7 ist über seine Verbindungsstelle zu dem Obergurt 5 bzw. Untergurt 6 hinaus um die beiden Befestigungsabschnitte 9, 10 verlängert. Der zweite Steg 8 ist nur über den Untergurt 6 hinaus um den Überstand 11 verlängert. Im Verbindungsbereich zwischen dem zweiten Steg 8 und dem Obergurt 5 ist eine Sicke 12 angebracht, um eine höhere Festigkeit zu erzielen. Eine weitere Sicke 13 ist an dem freien Ende des Überstandes 11 des zweiten Steges 8 angebracht. Die Sicken 12, 13 erstrecken sich über die gesamte Länge des Querträgers 1 bis zum Ende der Laschen 4. Der Querträger 1 weist des weiteren eine Ausnehmung 14 für die Hindurchführung der Lenksäule durch den Überstand 11 auf. Des weiteren besitzt der Querträger 1 in seinem Obergurt 5 einen Durchbruch 16 zum Hindurchführen eines Werkzeuges für die Herstellung der Verbindung zwischen dem Untergurt 6 und der Stütze 3. Die beiden Laschen 4, 4a werden durch Abtrennen des Steges 7 und des Obergurtes 5 sowie Untergurtes 6 über eine bestimmte Länge des Basisteiles erzielt. Zum Abtrennen kommt beispielsweise ein Stanzen in Frage.

An die beiden Befestigungsabschnitte 9, 10 ist der Halter 2 angeschlossen. Der Halter 2 liegt neben dem Querträger 1, also von dem zweiten Steg 8 aus gesehen auf der anderen Seite des Querträgers 1. Der Halter 2 ist unter anderem aus zwei Dreiecken 17, 18 und einem Viereck 19 als Grundprofil im Querschnitt aufgebaut. Das erste Dreieck 17 besitzt die beiden Seiten 20, 21 sowie eine Seite 22, die zugleich eine Seite des zweiten Dreieckes 18 darstellt. Von den beiden weiteren Seiten 23, 24 des zweiten Dreieckes 18 ist die Seite 24 zugleich Bestandteil des Viereckes 19. Die Seite 24 ist zur Bildung des Viereckes 19 jedoch über die Verbindung mit der Seite 23 hinaus verlängert. Das Viereck ist aus der Seite 24, der dazu parallelen Seite 25 und den beiden Seiten 26, 27 aufgebaut. Die Grundform des Viereckes 19 entspricht der eines Parallelogrammes. Die Seite 27, die im Abstand zu dem Dreieck 18 angeordnet ist, ist über die Seiten 24, 25 hinaus verlängert und bildet Flanschabschnitte 28, 29, von denen der Flanschabschnitt 28 mit dem Befestigungsabschnitt 9 des Querträgers 1 und der Flanschabschnitt 29 mit dem Befestigungsabschnitt 10 des Querträgers 1 verbunden ist. Ferner weist das Viereck 19 Einschnitte bzw. Einformungen zur Bildung von Schraubkanälen 30, 31 auf, damit das Lager der Lenksäule an dem Halter 2 angeschraubt werden kann.

Von der Spitze des Dreieckes 17 ausgehend, die durch die beiden Seiten 20, 21 gebildet wird, geht die Seite 20 abgewinkelt in eine Verbindungslasche 32 über. Die Verbindungslasche 32 besitzt beispielsweise ein Anschlußstück 33 und Schraubenbohrungen 34, die zur Festlegung des Halters 2 am unteren Windschutzscheibenquerträger mittels Schrauben dienen.

Die am Querträger 1 befestigte Stütze 3 ist, wie insbesondere aus Fig. 6 ersichtlich, im Querschnitt als Rechteckhohlprofil gestaltet. Die beiden Wände 35, 36 stellen die kurzen Wände des Rechteckprofiles dar und verlaufen parallel zueinander. Sie werden durch die beiden längeren Wände 37, 38 verbunden, wobei die Wand 38 über ihre Verbindung zu den beiden kurzen Wänden 35, 36 hinaus verlängert ist.

An einem Ende ist die Stütze 3 durch Entfernen der beiden kurzen Wände 35, 36 geteilt, so daß sich Anschlußabschnitte 39, 40 ergeben, die zum Verlauf des Profils der Stütze 3 abgewinkelt sind und mit der Unterseite des Querträgers, d.h. mit dem Untergurt 6 verbunden sind.

Das nach unten weisende freie Ende der Stütze 3 weist ebenfalls eine Veränderung gegenüber dem Basisprofil auf. Die Wände 35, 36, 37 sind durch Abtrennen entfernt, so daß sich ein Befestigungsanschlußabschnitt 41 ergibt, der mit Schraubenlöchern 42 versehen ist, die zur Hindurchführung von Schrauben zur Verbindung der Stütze 3 beispielsweise mit dem Tunnel des Kraftfahrzeuges dienen.

Zur Befestigung der Anschlußabschnitte 39, 40 der Stütze 3 mit dem Untergurt 6 bzw. der Flanschabschnitte 28, 29 mit den Befestigungsabschnitten 9, 10 des Querträgers 1 kann ein Fügeverfahren in Form des Clinchens vorgesehen sein, so daß sich Clinch-Verbindungsstellen 43 ergeben. Der Durchbruch 16 dient dazu, beispielsweise ein Clinch-Werkzeug oder einen Gegenhalter in den Querträger 1 einzuführen, damit die nötige Gegenkraft für die Erzielung der Verbindung zwischen den Anschlußabschnitten 39, 40 und dem Untergurt 6 aufgebracht werden kann.

### Bezugszeichenliste

- 1: Querträger
- 2: Halter
- 3: Stütze
- 4, 4a: Lasche
- 5: Obergurt
- 6: Untergurt
- 7: erster Steg
- 8: zweiter Steg
- 9, 10: Befestigungsabschnitte
- 11: Überstand
- 12, 13: Sicke
- 14: Ausnehmung im Überstand
- 15: Befestigungslöcher
- 16: Durchbruch
- 17: erstes Dreieck
- 18: zweites Dreieck
- 19: Viereck
- 20 - 27: Seiten
- 28, 29: Flanschabschnitte
- 30, 31: Kanäle
- 32: Verbindungslasche
- 33: Anschlußstück
- 34: Schraubenbohrung
- 35 - 38: Wände
- 39, 40, 41: Anschlußabschnitte
- 42: Schraubenbohrung
- 43: Clinch-Verbindungsstelle

## Patentansprüche

1. Träger für die Lagerung einer Lenksäule mit Lenkrad für ein Kraftfahrzeug, insbesondere einen Personenkraftwagen, mit einem hohlen Querträger (1), der zur Anordnung quer zur Fahrzeuglängsachse zwischen den beiden und zur Befestigung an den beiden A-Säulen des Kraftfahrzeuges gedacht ist, mit einer Stütze (3), die am Querträger (1) befestigt ist, von diesem nach unten absteht und zur Befestigung an der Bodengruppe oder dem Tunnel des Kraftfahrzeuges gedacht ist, und mit Mitteln zur Befestigung der Lagerung für die Lenksäule,
dadurch gekennzeichnet,
daß ein Kalter (2) vorgesehen ist, der am Querträger (1) befestigt ist, von diesem nach oben absteht und zur Befestigung am unteren Windschutzscheibenquerträger des Kraftfahrzeuges gedacht ist, daß der Halter (2) und die Stütze (3) und der Querträger (1) aus Hohlprofilen aus einem Aluminiumwerkstoff gebildet sind, daß der Querträger (1) Laschen (4, 4a) zur Befestigung an den beiden A-Säulen und die Stütze (3) Anschlußabschnitte (39, 40) zur Befestigung mit dem Querträger (1) einerseits und an der Bodengruppe oder dem Tunnel des Kraftfahrzeuges andererseits aufweist, wobei die Anschlußabschnitte (39, 40, 41) der Stütze (3) und die Laschen (4, 4a) des Querträgers von verbleibenden Teilen der Wände der als Hohlprofile gestalteten Basisteile gebildet und die Laschen (4, 4a) des Querträgers (1, 1a, 1b) und zumindest der/die Anschlußabschnitt/e (39, 40) der Stütze (3) zur Befestigung am Querträger jeweils zum Verlauf ihres als Hohlprofil verbleibenden Abschnittes abgewinkelt ist/sind.

2. Träger nach Anspruch 1,
dadurch gekennzeichnet,
daß die Laschen (4, 4a) und/oder die Anschlußabschnitte (39, 40, 41) durch Abtrennen von Abschnitten der übrigen Wände des jeweiligen als Hohlprofil gestalteten Basisteiles oder Teilen dessen Wände gebildet sind.

3. Träger nach Anspruch 2,
dadurch gekennzeichnet,
daß die Abschnitte durch Stanzen abgetrennt sind.

4. Träger nach einem der Ansprüche 1 bis 3,
dadurch gekennzeichnet,
daß der Anschlußabschnitt (41) der Stütze (3) zur Befestigung an der Bodengruppe oder dem Tunnel und/oder des Halters (2) zum Verlauf des als Hohlprofil jeweilig verbleibenden Abschnittes abgewinkelt ist.

5. Träger nach einem der Ansprüche 1 bis 4,
dadurch gekennzeichnet,
daß das Basisteil, aus dem der Querträger (1, 1a, 1b) gebildet ist, im Querschnitt als Rechteckhohlprofil mit einem Obergurt (5), einem dazu parallelen Untergurt (6) und den beiden jeweils ein Ende derselben verbindenden ersten und zweiten Stege (7, 8) gestaltet ist, wobei mindestens einer der beiden Stege (7, 8) über den Obergurt (5) und/oder den Untergurt (6) übersteht.

6. Träger nach Anspruch 5,
dadurch gekennzeichnet,
daß der erste Steg (7) beidseitig über den Obergurt (5) und Untergurt (6) zur Bildung von Befestigungsabschnitten (9, 10) vorsteht.

7. Träger nach Anspruch 5,
dadurch gekennzeichnet,
daß der zweite Steg (8) einseitig über den Untergurt (6) hinausgeführt ist.

8. Träger nach einem der Ansprüche 5 oder 6,
dadurch gekennzeichnet,
daß der Halter (2) mit dem ersten Steg (7) verbunden ist und, im Querschnitt des Querträgers (1) gesehen, neben dem Querträger (1) angeordnet ist.

9. Träger nach einem der Ansprüche 5 bis 8,
dadurch gekennzeichnet,
daß der Halter (2) einen Flansch (27) mit freien Flanschabschnitten (28, 29) aufweist, welche an den vorstehenden Befestigungsabschnitten (9, 10) befestigt sind.

10. Träger nach Anspruch 7,
dadurch gekennzeichnet,
daß, im Querschnitt gesehen, der zweite Steg (8) zum einen an der Verbindung zum Obergurt (5) und zum anderen zum freien Ende des über den Untergurt (6) vorstehenden Teils hin je mit einer Sicke (11, 13) versehen ist.

11. Träger nach einem der Ansprüche 1 bis 4,
dadurch gekennzeichnet,
daß das Bauteil, aus dem die Stütze (3) gebildet ist, im Querschnitt als Viereckhohlprofil gestaltet ist.

12. Träger nach Anspruch 11,
dadurch gekennzeichnet,
daß eine (38) der Wände (35, 36, 37, 38) der Stütze (3), im Querschnitt gesehen, über den Anschluß zu den beiden anschließenden Wänden (35, 36) vorsteht.

13. Träger nach einem der Ansprüche 1 bis 4 oder 9,
dadurch gekennzeichnet,
daß das Basisteil, aus dem der Halter (2) gebildet ist, im Querschnitt gesehen, aus zwei Dreiecken (17, 18) und einem Viereck (19) besteht, wobei die beiden Dreiecke (17, 18) eine gemeinsame Seite (22) und eines (18) der Dreiecke (17, 18) mit dem Viereck (19) ebenfalls eine gemeinsame Seite (24) aufweist, das das Dreieck (17), das nur mit dem anderen Dreieck (18) eine gemeinsamen Seite (22) aufweist, an seiner freien Spitze eine Verlängerung zur Bildung einer Verbindungslasche (32) aufweist und daß das Viereck (19) mit durch Überstand eines (27) seiner Wände gebildeten freien Flanschabschnitten (28, 29) zur Verbindung mit dem Querträger (1) versehen ist.

14. Träger nach Anspruch 13,
dadurch gekennzeichnet,
daß das Viereck (19) mit Einformungen zur Bildung von Kanälen (30, 31), insbesondere Schraubkanälen zum Anschluß der Lenksäulenlagerung versehen ist.

15. Träger nach einem der Ansprüche 1 bis 14,
dadurch gekennzeichnet,
daß der Halter (2) und/oder die Stütze (3) mit dem Querträger (1) durch Clinchen, Kleben oder Schrauben verbunden sind.

16. Träger nach einem der Ansprüche 1 bis 15,
dadurch gekennzeichnet,
daß die Basisteile zur Bildung des Halters (2), der Stütze (3) oder des Querträgers (1) durch Strangpreßteile dargestellt sind.

17. Träger nach einem der Ansprüche 1 bis 15,
dadurch gekennzeichnet,
daß die Basisteile zur Bildung der Stütze (3) oder des Querträgers (1) als Rollformteile oder längsnahtgeschweißte Profilrohre dargestellt sind.

18. Träger nach Anspruch 1,
dadurch gekennzeichnet,
daß der Aluminiumwerkstoff durch einen Werkstoff der Legierungsfamilie AA6xxx dargestellt ist.
